(19)

Europäisches
Patentamt
European
Patent Office
Office européen
des brevets

(11)  **EP 3 406 317 A1**

(12)  **EUROPEAN PATENT APPLICATION**

(43) Date of publication:
**28.11.2018   Bulletin 2018/48**

(21) Application number: **17382293.3**

(22) Date of filing: **22.05.2017**

(51) Int Cl.:
*B01D 47/06* (2006.01)          *B01D 47/12* (2006.01)
*B01D 53/18* (2006.01)          *B01D 53/78* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Universidad De Alcalá De Henares
28805 Alcala de Henares - Madrid (ES)**

(72) Inventor: **PÉREZ DÍAZ, José Luis
28341 Valdemoro - Madrid (ES)**

(74) Representative: **Balder IP Law, S.L.
Paseo de la Castellana 93
5ª planta
28046 Madrid (ES)**

(54)  **METHOD AND SYSTEM FOR ELIMINATING PARTICLES, GASES AND OR LIQUIDS FLOATING IN AIR**

(57)   The invention discloses a method for removing particles, gases and/or liquids from floating in air comprising the step of spraying a first fog of liquid droplets in a volume of air to be cleaned from particles, gases and/or liquids, wherein the size of the liquid droplets is between 2.5 and 20 microns.

EP 3 406 317 A1

## Description

### TECHNICAL FIELD

The present invention generally belongs to the field of cleaning air, for example in the case of pollution or certain, chemical, biological and nuclear agents.

The object of the invention is a novel method for eliminating small size contaminant particles floating in a volume of air as well as in gases.

### PRIOR ART

Pollution consisting of small size particles floating in the atmosphere is highly prejudicial for the health of the population. Particularly, the presence of particles with diameter lower than 10 micrometers is strongly correlated with respiratory diseases. Particles of this size are profusely produced by heating systems and Diesel engines (see, i.e. Michael Allaby, "Fog, smog and poisoned rain", Facts on File, Inc. New York, 2003). Pollen and other allergens are also sized within this range. Also, the increased use of nanoparticles is a source of concern, were no efficient solution for its filtration or removal is available.

Natural mechanisms removing particles from the atmosphere are known to be dry deposition or fallout and scavenging. The former mechanism is caused by gravity simply driving solid particles down to the ground, while the latter mechanism occurs when particles act as condensation nuclei that generate water raindrops that eventually also fall down to the ground. These raindrops further wash out other particles and droplets as they fall.

These natural mechanisms depending on very particular weather conditions, however, are often too slow for solving the daily problem of modern cities given the high rate of particle production.

Scrubbers using water sprinklers like that of US3691731 are used to remove pollutants from smoke ducts in industry. In this case, the water droplets must be large enough and ejected from sprinklers with such a momentum to fall down while the smoke is flowing upwards. Having a high falling velocity, the droplets generated cannot remain in the air sufficient time to remove small particles.

US2579282 describes a device for the treatment of gases that includes cooling to condensate the vapor onto the particles to be removed and creating fog. This method consumes a large power as a change of phase is involved. The mechanism of condensing around the condensation nuclei is completely different from the catch-up mechanism of the present invention as will be described below.

There are known fog generators, to the best of our knowledge none has been used for removing particles and pollutants having small size, such as those below 10 microns. Some of them are intended for theatre or shows and are usable only to generate fogs of a particular chemical substance. Some of them are based on warm generation that can be used to vaporize distillable organics (US2451019) or insecticides (US3037939) but they are not applicable as general purpose to any liquid, particularly they are not for water or water solutions.

Many known inventions like US4643355 claim to generate fogs to modify climate conditions. Patent US3584412 claims to generate stabilized 50-70 microns water fog to prevent freezing of crops. The size of the droplets in these inventions must be of the same order than the thermal infrared radiation, are not suited for cleaning small particle from the air.

In the same way US5156333 describes a method of generating a breathable fog drying, cooling and inducing water vapor. Cooling necessarily consumes a huge power, making this invention impractical.

This applies as well to DE3604239A1 which claims a process for producing natural mist from air mixing air at different thermal conditions (warm and humid with cold and dry).

Ultrasonic mist generators are much more efficient in terms of energy and are used for distribution of fogs of nutrient solution in aeroponic agriculture (US5937575A), to provide sterile fogs for medical purposes (US7810742B) or to disinfect seeds with ozonated water (Martin Spanoghe et al. 2015, Industrial-scale Malting Barley (Hordeum vulgare L.) Seed Disinfection by Fog of Ozonated Water Application, Ozone: Science & Engineering, DOI: 10.1080/01919512.2015.1079118) or to disinfect strawberries (F. Van de Velde et al. Optimization of strawberry disinfection by fogging of a mixture of peracetic acid and hydrogen peroxide based on microbial reduction, color and phytochemicals retention, Food Science and Technology International 0(0) 1-11 2016 DOI: 10.1177/1082013215625696) . However, currently they are not able to provide a large flow of fog and the size of droplet is typically smaller (1 to 3 micrometres) (see for example Ultrasonic humidifier VAPATRONICS of Teddington France data sheet http://www.teddington.com/en/ultrasonic-humidifier-vapatronics-1.2-I-h-hu25-836.html).

### BRIEF DESCRIPTION OF THE DRAWINGS

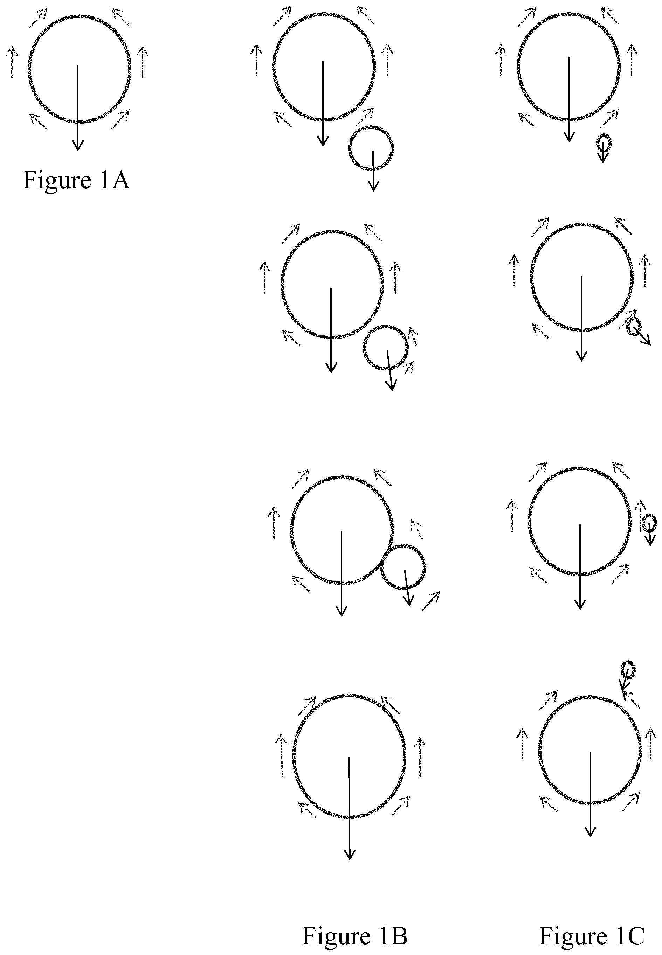

Figure 1A represents the air flow around a spherical droplet falling by the effect of gravity.

Figure 1B represents a sequence on how a relatively large particle is captured by a falling droplet.

Figure 1C represent a sequence of how a relatively small particle circulates around a falling droplet following the air flow. There is no capture of the particle.

## SUMMARY OF THE INVENTION

The inventor has solved the above problems by providing a method for eliminating particles, gases and/or liquids floating in air, comprising a step of spraying a first fog of liquid droplets in a volume of air to be cleaned from particles, gases and/or liquids, characterized in that the size of the liquid droplets is between 2.5 $\mu$m and 20 $\mu$m. This method constitutes a first aspect of the invention. In this way, the residence time in the air of said particles, gases or liquids is greatly reduced.

A second aspect of the invention is a system for the generation of a fog comprising liquid droplets, comprising a pneumatic circuit for providing a gas, a hydraulic circuit connected to a deposit for liquids, and a nozzle connected to said pneumatic system and said hydraulic system, said nozzle being configured to provide by the combined action of said gas and said liquid, liquid droplets having a size comprised between 2.5 $\mu$m and 20 $\mu$m. The combination of the liquid and the gas provides the adequate particle size and the velocity necessary to mix the fog generated with the volume of air to be cleaned. This is achieved by providing in the nozzle a pressure of gas which is the same or greater than the pressure of the liquid. The Reynolds obtained are typically greater than 2,500, and thus turbulent.

A third aspect of the invention is the use of a fog comprising liquid droplets having a size between 2.5 $\mu$m and 20 $\mu$m for removing (washing out) particles, gases and/or liquids floating in air.

The present invention achieves dissolution and/or hydrolysis of the gases and/or liquids which are washed out.

As explained below, this size of the liquid droplets can be design to more effectible clean the volume of air, depending on the size of the particles. Thus, for example, the size of the liquid droplets of the first fog can be between 2.5 $\mu$m and 15 um, or between 4 $\mu$m and 12 $\mu$m, or between 5 $\mu$m and 10 $\mu$m. For example, the size of the liquid droplets of the first fog can be between more than 3 $\mu$m and less than 10 $\mu$m, or between more than 4 $\mu$m and less than 10 $\mu$m. For example, the size of the liquid droplets of the first fog can be between 8 $\mu$m and 20 $\mu$m. The present invention minimizes the use of liquid -preferably water or water solutions and the production of polluted waste to be disposed.

## DESCRIPTION OF THE INVENTION

The present invention solves the aforementioned problem by spraying a fog of micrometric liquid droplets having a droplet size that is between a lower limit and an upper limit. These liquid droplets fill the volume of air to be cleaned and, thanks to a particularly designed droplet size, collide with the particles to be washed out. The collision causes the particles to be absorbed and dragged by the liquid droplets. The size of the liquid droplets is also selected such that they fall down to the ground in a relatively short time. Therefore, particles which otherwise would have remained floating in air even for hours are eliminated in just some minutes.

An optimal size of the droplets for enhancing the efficiency of this process is critical. Also, the problem as to with which characteristics or where to provide the fog of droplets for assuring the maximum number of collisions between droplets and particles was yet to be investigated until know. The inventor of the present application did research on these topics and discovered a number of surprising facts.

In the present application, the term *"size"* refers to the average diameter of the liquid droplets and particles, or to the equivalent average diameter in case the droplets or the particles are not completely spherical.

In the present application, the term *"fog"* refers to a plurality of liquid droplets which, when sprayed, is capable of fully occupying a volume of air, such as a room, for a certain amount of time until gravity takes them down to the ground.

In the present application, the term *"micrometric"* refers to a size in the order of micrometers, that is, approximately between about 1 $\mu$m and about 500 $\mu$m, preferably between 1 $\mu$m and 100 $\mu$m.

In the present application, the term *"particle"* refers solid entities, such as salts (e.g. radiactive salts), cells, microbes, spores, virus, soot or Diesel smoke.

Liquids includes fogs (for example, natural fogs) and aerosols, such as those used to disperse chemicals and/or biological agents.

## Dynamics of micrometric particles floating in air

The dynamics of a uniform and stationary flow of air around a sphere for a low Reynolds number was solved by Stokes. Typically, the Reynolds number for the fall of a water droplet of a radius of 10 $\mu$m in air will be around 10$^{-2}$.

For smaller radii this number will be even lower. In such a case, according to Lamb H. (1994), "Hydrodynamics" (6th Edition), Cambridge University Press, ISBN 978-0-521-45868-9, Navier-Stokes equations will collapse to:

$$\vec{\nabla}_\rho = \mu\nabla^2\vec{u} = -\mu\vec{\nabla}\times\vec{\omega} \qquad\qquad \text{Eq. 1}$$

where p = pressure
$\mu$ = dynamic viscosity of air
$\vec{\mu}$ = air velocity
$\vec{\omega} = \vec{\nabla}\times\vec{\mu}$ is the vorticity.

Assuming that the air exchange with the liquid is negligible, then the continuity equation will stand:

$$\vec{\nabla}\cdot\vec{u} = 0 \qquad\qquad \text{Eq. 2}$$

As the problem is axil symmetric, we can write using cylindrical coordinates r, $\varphi$ and z -taking z as the direction of the air flow:

$$v_r = \frac{1}{r}\frac{\varphi\psi}{\varphi r}$$
$$v_z = \frac{1}{r}\frac{\varphi\psi}{\varphi r} \qquad\qquad \text{Eq. 3}$$

where the Stokes Flow Function is:

$$\psi = -\frac{1}{2}Vr^2\left[1 - \frac{3}{2}\frac{R}{\sqrt{r^2+z^2}} + \frac{1}{2}\left(\frac{R}{\sqrt{r^2+z^2}}\right)^3\right] \qquad\qquad \text{Eq. 3b}$$

where V = the velocity of the air at an infinite distance of the sphere
R = the radius of the sphere.

Stokes also derived the expression for the viscous stress (Force per unit surface) exerted by the air on the surface of the sphere:

$$\frac{d\vec{F}}{ds} = \frac{3\mu V}{2R}\vec{e_z} = \frac{3\mu\vec{V}}{2R} \qquad\qquad \text{Eq. 4}$$

where $\vec{e_z}$ is the unitary vector in the z axis
s is the unit surface of the droplet

In this remarkable that case the stress is constant for all the points of the sphere and therefore it is easily integrated to provide the total force exerted by the flow of air onto the sphere:

$$\vec{F} = 6\pi R\mu\vec{V} \qquad\qquad \text{Eq. 5}$$

As a well-known consequence of this, the fall final speed of a particle of density $\rho_p$ and radius R can be written as:

$$\vec{V_p} = \frac{2}{9}\frac{R^2 g\,(\rho_p - \rho_a)}{\mu} \qquad\qquad \text{Eq. 6}$$

where g = gravity

$\rho_a$ = the density of air

This expression can be used for calculating the final fall speed (terminal velocity or terminal fall velocity) of a droplet suspended in air. For example, for a water droplet having a diameter of 2 $\mu$m falling in air at room temperature, the final speed is about $1.2\cdot10^{-4}$ m/s = 0.72 cm/min. For a liquid droplet having a diameter of 10 $\mu$m, the final speed is around $3\cdot10^{-3}$ m/s= 18 cm/min (i.e. 25 times faster). In other words, it would take about 13-14 minutes to a liquid droplet having a diameter of 10 $\mu$m to fall from the ceiling to the ground in a 2.40 meter high room.

In absence of gravity or any other external field, if a spherical droplet with initial speed $v_0$ is suddenly exposed to a uniform air flow with velocity V then the speed of the droplet at time t will be:

$$\vec{V_p}(t) = \vec{V} + (\vec{V_0} - \vec{V})e^{\frac{-t}{\tau}} \qquad \text{Eq. 7}$$

where $\tau$ = damping time

The damping time $\tau$ is the time it takes the speed of the particle or droplet to become the velocity V.

$$\tau = \frac{m}{6\pi R\mu} \qquad \text{Eq. 7b}$$

where M = the mass of the particle
R = the radius

Therefore, we can formally define the damping time as the time it takes the difference of the particle speed with respect to the fluid velocity to be 1/e times its initial value. We can interpret it as the time the particle takes to adapt to the fluid velocity.

For droplets having a diameter of 2 $\mu$m floating in air at room temperature, the damping time is about $5\cdot10^{-5}$ s, while for water droplets having a diameter of 20 $\mu$m, the damping time is 5 ms. These are the times required for the droplets to reach the velocity of the gas flow around it. In this way, the droplets generated according to the present invention follow the gas flow efficiently in very short times. This translates in a very efficient homogeneous spatial distribution.

By integration, it is easy to find the depth that the water droplet penetrates for instance in a flow when it is impinged into it with velocity $\vec{V_0}$:

$$S = \int_0^\infty (\vec{V_0} - \vec{V})\,dt\ = \tau(\vec{V_0} - \vec{V}) \qquad \text{Eq. 8}$$

**Ensuring collision between particles and droplets**

The method of the invention results in that the final falling speed of the liquid droplets is greater than the final falling speed of the particles; the contaminants are thus efficiently recovered and the air more effectively cleaned. Further, the inventor of the present application has discovered a further surprising effect. One would think that the likeliness of a collision between a falling liquid droplet and a particle increases with the size of the liquid droplet. However, as the liquid droplet falls, the air below it is deflected laterally and then the air goes around the droplet. There is an outwards horizontal (radial cylindrical) component in the velocity of the air under the droplet having an order of magnitude of V1. See the arrows in figures 1A, 1B and 1C representing the air circulating around the water droplets. Conversely, the flow of air has an inwards horizontal component above the liquid droplet, since the flow of air must fill the space left behind by the liquid droplet as it falls.

The liquid droplets collide with the particles from above, dragging them down even faster after the collision. This situation where a droplet collides with a particle is now analyzed. Fig. 1 shows the situation where a falling particle having a radius R2 is about to collide with a liquid droplet having a radius R1. Both, the liquid droplet and the particle, are considered to be spherical for the sake of simplicity, but it would be possible for them to have different shapes. The liquid droplet falls at a constant speed V1 given by Eq. 6 and the particle falls at a constant speed of V2. For the sake of clarity, we will consider the liquid droplet to be standing still inside an upwards stream of air having a speed V1

Then, assuming that the density of the particle is similar to that of the liquid droplet, in order to ensure that the liquid droplets fall down faster than the particle, and therefore collides therewith, the size of the liquid droplet must be greater than the size of the particle. That is, R2 < R1 must be true, i.e. the lower limit for the size of the liquid droplet is the size of the particle. Otherwise, according to Eq. 6, the particle would fall faster than the liquid droplet and they would not collide. Should the density of the particle and liquid be different it is easy for an expert in dynamics to modify the previous inequality following our rationale.

On the other hand, the size of the liquid droplet cannot have an excessive size relative to the particle, because it creates a situation such as that shown in figure 1C, wherein the particle is deflected from the path of the droplet without being captured.

It is therefore preferred that the size of the liquid droplet of the fog used in the method of the invention is greater than the size of the particle to be cleaned, which is usually between 1 $\mu$m and 15 $\mu$m, for example between 1 $\mu$m and 10 $\mu$m. The method and apparatus of the invention are especially efficient to clean particle sizes in the range of from 1 $\mu$m to 10 $\mu$m, where other known systems would fail due to an excessive liquid droplet size, or a too small liquid droplet size.

Now, the inventor has discovered that the particle can be dragged by the horizontal flow under the liquid droplet according to Eq. 5. Although a more precise solution can be calculated by solving the above mentioned differential equations, it is possible to roughly estimate the order of magnitude of the horizontal displacement $\Delta r_2$ that the particle will suffer due to the perturbation in air caused by the liquid droplet. This displacement would be that of air itself $\Delta r_a$ minus the shift given by Eq. 8 as:

$$\Delta r_2 \backsim \Delta r_a - V_1 \tau_2 \qquad \text{Eq. 9}$$

Therefore, the critical radial position for which the second particle will just touch will be given by:

$$r_c = R_2 - \Delta r_a + V_1 \tau_2 \qquad \text{Eq. 10}$$

Therefore, if the horizontal distance between the center of the particle and the center of the droplet is smaller than $r_c$, then the particle will collide with the liquid droplet. If the particle is soluble, then it will collapse and eventually be washed out by the falling liquid droplet. Otherwise, if the horizontal distance between the center of the particle and the center of the liquid droplet is greater than $r_c$, then particle will be dragged horizontally outwards by the horizontal flow of air and it will not touch the liquid droplet. In other words, all particles having their center within a cylinder of critical radius $r_c$ under the liquid droplet will be washed out.

Obviously, the larger the critical radius is the more efficient a liquid droplet will be in washing out particles. As $\Delta r_a$ is of the order of R1, we can estimate:

$$r_c \simeq R_2 - R_1 + V_1 \tau_2 \qquad \text{Eq. 11}$$

It is clear from this that a value of the drag term $V_1 \cdot \tau_2$ lower than the geometric term "R1-R2" implies that no particle collides with the droplet and then $r_c$=0. If this happens, no wash out will occur.

In the case of spherical particles with density equal to that of water, Eq. 11 can be written as:

$$r_c \simeq R_1 \left[ \frac{R_2}{R_1} - 1 + \frac{4g}{81} \frac{\rho_w^2}{\mu^2} R_2^2 R_1 \right] \qquad \text{Eq. 12}$$

In spite of the rough approach, the above calculation clearly shows the essential physics behind the present invention. In fact, the exact solution of the differential equations would provide a slightly larger range due to the positive effect of the z component of the relative speed of the second particle with respect to the liquid droplet. Additionally, surface tension and hydrophilicity would help to create a larger effective critical radius as it would not be necessary that the spheres touch themselves to be attracted and collapse. On the contrary, hydrophobicity will reduce the effective value of the critical radius for the same reason.

Now, if we create a fog of N1 liquid droplets of radius R1 per unit volume to wash out particles for which their critical radius were $r_c$, then the fraction of horizontal surface effectively washed out per unit time will be:

$$f(R_2) = \pi r_c^2 N_1 \cdot V_1 \qquad \text{Eq. 13}$$

For example, a fog with $N_1$=5·10$^9$ m$^{-3}$ droplets having a diameter of 10 $\mu$m (falling at 18 cm /min) will wash out a fraction of 7% per minute for those particles for which $r_c/R1=1$ (i.e. slightly smaller than the droplets).

**Method of the invention**

An aspect of the present invention is directed to a method for removing particles floating in air comprising the step of spraying a first fog of liquid droplets in a volume of air to be cleaned from particles, where the size of the liquid droplets is between 2.5 $\mu$m and 20 $\mu$m.

The size of the liquid droplets can be designed to be slightly greater than the size of the particles which the invention is designed to clean cleaned. For example, the liquid droplet size can be between a 1% and a 30% larger than the size of the particle which it is intended to clean, for example between 3% and 20% larger. The lower limit in the size of the droplets ensures that the final falling speed of the droplets is greater than the final falling speed of the particles. The upper limit in the size of the droplets ensures a large probability of collision with the particles. In this way, the particles are captured as represented in figure 1B. If the size of the droplet is too large, the particle is deflected from the path of the droplet without being captured (figure 1 C). The method of the invention can thus be adapted to very different particle sizes and densities.

The liquid droplets are sprayed in such a way that the first fog fills as much as possible of the volume of air to be cleaned, preferably so that it substantially fills the complete volume. This feature depends both on the positioning of the nozzle or nozzles droplet generating device and also on the spraying direction. More importantly, it is also dependent on the use of the combination of a liquid and an a gas to generate the droplet. For example, a first fog could be sprayed from a position slightly above the volume to be decontaminated. For example, the method according the method of the invention can further comprise a step of subsequently spraying a second fog of liquid droplets in the volume of air to be cleaned from particles, wherein the size of the liquid droplets of the second fog is greater than the size of the liquid droplets of the first fog. The liquid droplets size in said second fog can be comprised between 2.5 $\mu$m and 20 $\mu$m.

The purpose of providing a second fog is bringing the first fog down to the ground faster. Indeed, the final falling speed of the first fog is naturally lower than the final falling speed of the second fog (see Eq. 6). Therefore, in case the time needed for the first fog to fall down to the ground was excessive, a second fog having a greater droplet size would help bring the first fog down faster. The droplets of the first fog and the droplets of the second fog would collide, giving rise to droplets of an even bigger size. These droplets would have a higher final fall speed, and therefore the volume of air would be cleaned faster. On the other hand, the application of the second fog without the first fog may be inefficient due to the excessive size of the droplets.

For example, in order to remove pollutant particles having a diameter of 2.5 $\mu$m, a reasonable process can be designed as follows. Initially, a first fog of 4-5 $\mu$m diameter droplets is generated for absorbing the particles. This first fog, however, has a very slow final fall speed. Therefore, once the droplets of the first fog have absorbed all the particles, the first fog can be washed out by spraying a second fog of droplets having a diameter of 10 $\mu$m. The whole process would take a few minutes for the normal height of a room.

The method can advantageously comprise a step of increasing the speed of the air after the application of the first fog or the second fog. Indeed, the larger the gravity acceleration is, the larger **$r_c$** and the faster the liquid droplet falls. Therefore, accelerating the air, e.g. by means of a centrifugal fan, would improve the wash out of droplets.

The volume of air to be cleaned could be closed, i.e. a room, or it could be an open volume, i.e. outdoors. Further, note that the absorption of the particles by the droplets can take place according to any physical/chemical process. Solid particles colliding with the droplets are trapped merely by travelling across the liquid-gas droplet interface to finally enter the droplets. Liquid particles are trapped by the droplets in a number of known different ways depending on the relationship between their surface tensions. Gaseous substances, i.e. the molecules of a gas, move by diffusion and dissolve into the liquid when in contact with the droplet interface. Further chemical processes are possible, such as the hydrolysis of the particle into water droplets. In this specific case, the effectiveness of the hydrolysis process will depend on the droplet surface and on the time it is available. The surface is proportional to the square of the radius of the droplet and the time is inversely proportional to the final falling speed, with in turn is also proportional to the square of the radius. Therefore, a particular number of droplets will provide the same surface-time product irrespective of their size. But if the droplet is too big it generates excessive residues, and if it is too small it will not fall and thus not exercise the function of cleaning.

Liquid droplets for the method of the invention can be generated by means of any suitable device, probably in combination with a fan, compressed air nozzle, or any other device to provide the injection effect. Devices capable of generating and spraying liquid droplets of micrometric size for creating a fog are known in the art. For example, the device disclosed in patent application EP17382233, filed April 28, 2017, could be employed.

The method and system of the invention are also useful for cleaning air form particles, even if the size of said particles a bigger than the size of said liquid droplets. For example, the method of the invention could be used to remove contaminant particles floating in air such as powder, bacteria, spores, pollen, smoke, soot, etc. having a diameter of between 2 $\mu$m and 100 $\mu$m.

In the invention, the size of the liquid droplets of the first fog is between 2.5 $\mu$m and 20 $\mu$m. A fog of droplets of this size range is especially suited for eliminating particles having a diameter of less than 10 $\mu$m, for example between 0.01 and 10 microns, such as those generated by diesel engines and heating systems. Further, this diameter range is further advantageous because, for smaller droplets, evaporation starts to be excessive and a danger of the whole droplet being evaporated exists while, for larger droplets, the proportion of particle collisions starts to curb down. Further, the final falling speed of this diameter range allows the droplets to fall to the ground from a ceiling of typical height in just a few minutes, or even seconds. This ensures that a room can be decontaminated in a reasonable period of time. Even further, since the surface/volume ratio decreases with the diameter of the droplet, larger droplets require a proportionally larger amount of water, eventually becoming impractical and even difficult to make.

The liquid making up the droplets could be selected depending on the specific contaminant particles to be cleaned. However, in a further preferred embodiment of the invention the liquid making up the droplets is water. Thus, the method of the invention allows the use of eco-friendly substances, and the fog generated can even be used in the presence of living beings, such as animals or humans, without harming them, for example in the removal of natural fogs.

In a preferred embodiment of the invention, the water further comprises an additive, such as glycol or hydrogen peroxide, to decrease the evaporation rate of the droplets. By slowing down the evaporation rate of the droplets, they are given more time to collide with the particles to be washed out. The efficiency of the method is thereby enhanced.

In yet a preferred embodiment of the invention, the water further comprises at least one of a disinfectant, a detergent, a catalyst, a surfactant, or any combination thereof. The addition of a disinfectant, such as hydrogen peroxide, add a disinfection feature to the general decontamination purpose of the method. The addition of a surfactant, such as alcohol, improves the efficiency of the method for washing out hydrophobic particles. The addition of a detergent increases the affinity of the droplets towards non-hydrophilic particles. The addition of a catalyst is intended to promote hydrolysis or any other chemical reaction between the droplets and the particles. The catalyst may be in the form of solid particles.

## DESCRIPTION OF WAYS OF CARRYING OUT THE INVENTION

### Example 1: Decontamination of diesel smoke particles

A fog of about 80 million droplets/m$^3$ having a size of 5 $\mu$m and about 20 million droplets/m$^3$ having a diameter of 10 $\mu$m was sprayed for one minute in a room of 15 m$^3$ where Diesel smoke particles of sizes between 2.5 $\mu$m and 10 $\mu$m were present. After that, the particle number in the air was reduced from 10,000 to about 100 particles/m$^3$ for particles having a diameter of 2.5 $\mu$m. Also, those having a size of 5 $\mu$m and 10 $\mu$mwere significantly reduced. The air pollution level in a city like Madrid is usually about 100 times greater for the 2.5 $\mu$m particles and about twice for the 5 and 10 $\mu$m particles. The present method is even capable of cleaning the pollution in a big city. For a contamination from Diesel smoke the initial content of particles having a size of 2.5 $\mu$m was 2,000,000 particles/m$^3$, and was reduced to 100 particles/m$^3$.

### Example 2: decontamination of biological warfare agents

Spraying with a ¼ nozzle of the previously mentioned patent application EP17382233 about 80 million droplets/m$^3$ having a diameter of 5 $\mu$m and over 20 million droplets/m$^3$ having a diameter of 10 $\mu$m in a room of 15 m$^3$ contaminated with spores, removes 98% of the spores in only 30 seconds.

## Claims

1. Method for eliminating particles, gases and/or liquids floating in air, comprising a step of spraying a first fog of liquid droplets in a volume of air to be cleaned from particles, gases and/or liquids, **characterized in that** the size of the liquid droplets is between 2.5 $\mu$m and 20 $\mu$m.

2. Method according to claim 1, wherein the size of the liquid droplets of the first fog is between 2.5 $\mu$m and 15 $\mu$m.

3. Method according to any of the previous claims, wherein the size of the liquid droplets of the first fog is between 4 $\mu$m and 12 $\mu$m.

4. Method according to any of the previous claims, wherein the size of the liquid droplets of the first fog is between 5 $\mu$m and 10 $\mu$m.

5. Method according to any of the previous claims, further comprising a step of subsequently spraying a second fog of liquid droplets in the volume of air to be cleaned from particles, wherein the size of the liquid droplets of the second fog is greater than the size of the liquid droplets of the first fog.

6. Method according to claim 5, wherein the liquid droplets size in said second fog is comprised between 2.5 $\mu$m and 20 $\mu$m.

7. Method according to any of the previous claims, further comprising the step of increasing the speed of the air after the application of the first fog or the second fog.

8. Method according to any of the previous claims, wherein the liquid making up the droplets is water.

9. Method according to claim 8, wherein the water further comprises an additive to decrease the evaporation rate of the droplets.

10. Method according to claim 9, wherein the additive to decrease the evaporation rate of the droplets is glycol or hydrogen peroxide.

11. Method according to any of claims 7 to 10, wherein the water further comprises at least one of a disinfectant, a detergent, a catalyst, a surfactant, or any combination thereof.

12. Method according to claim 11, wherein the surfactant is alcohol.

13. Method according to any of claims 11 or 12, wherein the disinfectant is hydrogen peroxide.

14. System for the generation of a fog comprising liquid droplets, comprising a pneumatic circuit for providing a gas, a hydraulic circuit connected to a deposit for liquids, and a nozzle connected to said pneumatic system and said hydraulic system, said nozzle being configured to provide by the combined action of said gas and said liquid, liquid droplets having a size comprised between 2.5 $\mu$m and 20 $\mu$m.

15. Use of a fog comprising liquid droplets having a size comprised between 2.5 $\mu$m and 20 $\mu$m for removing particles, gases and/or liquids floating in air

Figure 1A

Figure 1B          Figure 1C

Europäisches
Patentamt

European
Patent Office

Office européen
des brevets

# EUROPEAN SEARCH REPORT

Application Number

EP 17 38 2293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 436 666 A1 (RAFSON HAROLD J [US]) 17 July 1991 (1991-07-17) * page 8, lines 28-39; claims 1-8; figure 2 * ----- | 1-11, 13-15 | INV. B01D47/06 B01D47/12 B01D53/18 B01D53/78 |
| A | US 4 720 290 A (MCCOY DUANE C [US]) 19 January 1988 (1988-01-19) * column 2, lines 59-63 * ----- | 12 | |

TECHNICAL FIELDS
SEARCHED (IPC)

B01D

The present search report has been drawn up for all claims

| Place of search | Date of completion of the search | Examiner |
|---|---|---|
| Munich | 25 October 2017 | García Alonso, Nuria |

EPO FORM 1503 03.82 (P04C01)

## ANNEX TO THE EUROPEAN SEARCH REPORT
## ON EUROPEAN PATENT APPLICATION NO.

EP 17 38 2293

This annex lists the patent family members relating to the patent documents cited in  the above-mentioned European search report.
The members are as contained in the European Patent Office EDP file on
The European Patent Office is in no way liable for these particulars which are merely given for the purpose of information.

25-10-2017

| Patent document cited in search report | | Publication date | Patent family member(s) | | Publication date |
|---|---|---|---|---|---|
| EP 0436666 | A1 | 17-07-1991 | AT | 101809 T | 15-03-1994 |
| | | | CA | 1330528 C | 05-07-1994 |
| | | | DE | 68913307 D1 | 31-03-1994 |
| | | | EP | 0436666 A1 | 17-07-1991 |
| | | | US | 4863495 A | 05-09-1989 |
| | | | WO | 9101794 A1 | 21-02-1991 |
| US 4720290 | A | 19-01-1988 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3691731 A
- US 2579282 A
- US 2451019 A
- US 3037939 A
- US 4643355 A
- US 3584412 A
- US 5156333 A
- DE 3604239 A1
- US 5937575 A
- US 7810742 B
- EP 17382233 A

**Non-patent literature cited in the description**

- **MICHAEL ALLABY.** Fog, smog and poisoned rain. Facts on File, Inc, 2003
- **MARTIN SPANOGHE et al.** *Industrial-scale Malting Barley (Hordeum vulgare L.) Seed Disinfection by Fog of Ozonated Water Application, Ozone: Science & Engineering,* 2015
- **F. VAN DE VELDE et al.** Optimization of strawberry disinfection by fogging of a mixture of peracetic acid and hydrogen peroxide based on microbial reduction, color and phytochemicals retention. *Food Science and Technology International,* 2016, vol. 0 (0), 1-11
- **LAMB H.** Hydrodynamics. Cambridge University Press, 1994